# FASCICULE DE BREVET EUROPEEN

(11) **EP 2 769 130 B1**
(45) Date de publication et mention de la délivrance du brevet: **13.12.2017**
(21) Numéro de dépôt: 12787777.7
(22) Date de dépôt: 19.10.2012
(51) Int. Cl.: E02B 17/02, B63B 27/00, F16L 1/24, F16L 1/15, E21B 43/013, E21B 17/01

(54) **MÉTHODE D'INSTALLATION D'UNE TOUR AUTOPORTÉE D'EXTRACTION DES HYDROCARBURES**
VERFAHREN ZUR INSTALLATION EINES SELBSTTRAGENDEN TURMS ZUR EXTRAKTION VON KOHLENWASSERSTOFFEN
METHOD FOR INSTALLING A SELF-SUPPORTING TOWER FOR EXTRACTING HYDROCARBONS

(30) Priorité: 21.10.2011 FR 1159566
(43) Date de publication de la demande: 27.08.2014
(73) Titulaire: Technip France, 92400 Courbevoie (FR)
(72) Inventeur: LUPPI, Ange, 30000 Nîmes (FR)
(74) Mandataire: Gendron, Vincent Christian
(86) Numéro de dépôt international: PCT/FR2012/052391
(87) Numéro de publication internationale: WO 2013/057445

(56) Documents cités:
- FR-A1- 2 768 457
- GB-A- 2 475 108
- US-A- 4 423 984
- US-A1- 2005 109 513

## Description

La présente invention se rapporte à une méthode d'installation d'une tour autoportée d'extraction des hydrocarbures en milieu marin et à une tour ainsi installée.

La méthode vise en particulier l'installation de tours autoportées dans les milieux marins de grande profondeur pour extraire les hydrocarbures présents dans le sous-sol marin, et plus précisément pour remonter ces hydrocarbures, depuis le fond marin vers la surface.

De telles tours autoportées nécessitent la mise en oeuvre de conduites tubulaires de grande longueur et également de large diamètre, et partant, des flotteurs volumineux pour les maintenir suspendues verticalement dans le milieu marin. Pour ce faire, on implante tout d'abord une installation d'ancrage dans le fond marin au-dessus du sous-sol riche en hydrocarbures, puis on remorque en surface au moyen d'un navire le flotteur et la conduite jusqu'à une zone d'installation située sensiblement au droit de l'installation d'ancrage. La conduite est généralement gonflée d'air pour améliorer sa flottabilité et faciliter le transport, et elle est raccordée au flotteur par une extrémité de manière à pouvoir remorquer l'ensemble. Ensuite, la seule conduite est progressivement immergée tandis que le flotteur demeure couché à la surface. Aussi, la conduite est reliée au flotteur au moyen d'organes de pivotement pour autoriser la conduite à pivoter d'une position horizontale vers une position sensiblement verticale. L'extrémité libre de la conduite est alors reliée à une ligne de tirage, laquelle est tout d'abord étendue jusqu'à l'installation d'ancrage où elle est engagée à travers des moyens de renvoi, puis ensuite étendue jusqu'à un navire de surface. Le navire de surface s'éloigne alors de la zone d'installation ce qui provoque l'entraînement de l'extrémité libre de la conduite en mouvement vers l'installation d'ancrage. Partant, le flotteur bascule en pivotant autour de l'extrémité de la conduite à mesure qu'il s'immerge. Aussi, le flotteur s'enfonce à mesure que l'extrémité libre se rapproche de l'installation d'ancrage. Après que l'extrémité libre de la conduite a été raccordée à l'installation d'ancrage, le flotteur exerce une force ascensionnelle orientée vers la surface qui permet de maintenir la conduite tubulaire montante verticalement en partant de l'installation d'ancrage.

On pourra se référer au document FR 2 768 457, lequel décrit une telle méthode d'installation de tour autoportée.

Cependant, la profondeur des sous-sols marins exploités devenant de plus en plus importante, les conduites montantes et les flotteurs sont respectivement plus longs et volumineux et partants, les méthodes d'installation des tours autoportées deviennent plus complexes.

Aussi, un problème qui se pose et que vise à résoudre la présente invention est de fournir une méthode d'installation d'une tour autoportée en milieu marin qui soit plus simple et par conséquent moins couteuse. Le document US 2005/0109513 A1 divulgue le préambule de la revendication 1. Dans ce but, la présente invention propose une méthode d'installation d'une tour autoportée d'extraction des hydrocarbures en milieu marin, ledit milieu marin selon la revendication 1. Ainsi, une caractéristique de l'invention réside dans la mise en oeuvre du flotteur et de la conduite tubulaire de manière séparée dans une première phase de l'installation. Ils sont tout d'abord transportés indépendamment l'un de l'autre dans la zone d'installation car les moyens de remorquage ne permettent plus d'entraîner ensemble le flotteur et la conduite compte tenu de leurs dimensions de plus en plus élevées. Le flotteur flotte alors dans une position horizontale à la surface dans la zone d'installation. On l'immerge et il bascule vers une position verticale. On le maintien alors sous la surface, de préférence en dessous de la zone de turbulence, et à distance de l'installation d'ancrage. Ce n'est qu'ensuite que l'on vient suspendre la conduite tubulaire au flotteur avant d'entraîner l'ensemble vers le fond marin. De la sorte, il n'est nul besoin de prévoir des moyens de pivotement de l'extrémité de la conduite tubulaire vis-à-vis du flotteur puisque ce dernier est déjà dans une position verticale lorsqu'on vient y suspendre la conduite tubulaire. En outre, l'entraînement en mouvement de la conduite tubulaire et du flotteur indépendamment l'un de l'autre requiert des moyens de levage ordinaire et de capacités modestes.

En outre, on fournit un conduit flexible, et on étend ledit conduit flexible entre ledit flotteur et ladite surface pour raccorder ledit conduit flexible à ladite autre desdites extrémités de ladite conduite tubulaire. Aussi, l'hydrocarbure est remonté jusqu'au flotteur il est ensuite transporté jusqu'à la surface, à l'intérieur d'un réservoir grâce au conduit flexible.

Selon un mode de mise en oeuvre particulièrement avantageux, on fournit une conduite tubulaire rigide, qui peut, soit être remorqué en une seule pièce dans la zone d'installation soit encore être fabriquée sur place sur un navire de pose approprié.

Selon une caractéristique de mise en oeuvre de l'invention préférentielle, ladite autre desdites extrémités, apte à être suspendue au flotteur, présente un renflement, tandis que ledit flotteur comporte un étrier d'accrochage, et on engage latéralement ladite conduite tubulaire à travers ledit étrier d'accrochage de manière à pouvoir appuyer ledit renflement sur ledit étrier. Aussi, on retient de préférence ladite conduite tubulaire depuis ladite surface par ladite autre desdites extrémités pour pouvoir engager ladite autre desdites extrémités à travers ledit étrier. Pour ce faire, on maintient la conduite tubulaire suspendue à une élingue depuis le navire de surface et on approche le navire de la zone d'installation pour engager latéralement la conduite tubulaire à travers l'étrier d'accrochage. Ensuite, on déroule l'élingue de manière à descendre la conduite tubulaire et à venir appuyer son extrémité renflée sur l'étrier d'accrochage. On fournit selon l'invention au moins une ligne d'ancrage pour ancrer ledit flotteur dans ledit fond marin, de manière à pouvoir maintenir ledit flotteur immergé à distance de ladite installation d'ancrage. On prévoit, de préférence deux lignes d'ancrage pour mieux stabiliser le flotteur. Et les lignes d'ancrage sont par exemple reliées à l'installation d'ancrage. En outre, on libère ledit flotteur de ladite au moins une ligne d'ancrage lorsque ladite une desdites extrémités de ladite conduite tubulaire est accrochée à ladite installation d'ancrage. De la sorte, les efforts ascensionnels induits par le flotteur immergé sont repris par la conduite tubulaire elle-même accrochée à l'installation d'ancrage. Aussi, la conduite tubulaire est-elle maintenue verticalement depuis l'installation d'ancrage.

L'entraînement en mouvement dudit flotteur et de ladite conduite tubulaire vers ledit fond s'effectue avantageusement en entraînant ladite une desdites extrémités de ladite conduite tubulaire vers ladite installation d'ancrage. Ainsi, par la seule traction sur l'extrémité libre de la conduite tubulaire on vient rapprocher cette extrémité de l'installation d'ancrage, tandis que l'autre extrémité est suspendue au flotteur. Les efforts de traction sur cette extrémité libre doivent par conséquent être supérieurs aux efforts ascensionnels induits par le flotteur sur la conduite tubulaire. Préférentiellement, on fournit en outre un câble de tirage, et on relie ledit câble de tirage à ladite une desdites extrémités de ladite conduite tubulaire pour l'étendre d'une part dans des organes de renvoi montés sur ladite installation d'ancrage et d'autre part vers ladite surface de manière à pouvoir tirer ledit câble de tirage depuis ladite surface. De la sorte, par le simple mouvement d'un navire auquel est relié le câble de tirage, et en éloignant de la zone d'installation, on entraîne à la fois la conduite tubulaire et le flotteur vers le fond marin pour pouvoir accrocher l'extrémité libre de la conduite tubulaire à l'installation d'ancrage. La méthode comprend avantageusement la fourniture d'un flotteur présentant deux parties espacées l'une de l'autre et reliées ensemble par une poutre de liaison, et d'autre part une conduite tubulaire présentant deux extrémités opposées, ledit flotteur étant destiné à être porté entre ledit fond et ladite surface, tandis que l'une desdites extrémités de ladite conduite est accrochée à ladite installation d'ancrage et que l'autre desdites extrémités est solidaire de ladite poutre de liaison. Selon l'invention, lesdites deux parties espacées l'une de l'autre et ladite poutre de liaison forment un flotteur en U présentant un espace libre entre lesdites parties. Cet espace libre s'étend verticalement, d'une part au-dessus de la poutre jusqu'à l'extrémité supérieure des deux parties de flotteur pour déboucher à l'extérieur, et d'autre part en dessous de la poutre. De la sorte, grâce à l'espace libre situé entre les deux parties du flotteur, l'approche de la conduite tubulaire et son guidage depuis le navire de surface sont rendus plus aisés.

Au surplus, ladite poutre de liaison présente un évidement traversant, débouchant d'une part selon une première direction dans ledit espace libre et à l'opposé dudit espace libre par rapport à ladite poutre, et débouchant d'autre part selon une seconde direction perpendiculaire à ladite première direction, dans un espace libre d'approche de manière à former un étrier d'accrochage. Ainsi, la conduite tubulaire suspendue s'étend sensiblement parallèlement à ladite première direction et elle est entraînée latéralement, selon la direction perpendiculaire à travers l'espace libre d'approche pour pouvoir ensuite être relâchée selon ladite première direction à travers l'évidement traversant.

De plus, ladite autre desdites extrémités de ladite conduite tubulaire rigide présente un renflement apte à être porté à l'intérieur dudit espace libre pour venir en prise dans ledit étrier d'accrochage et de manière à pouvoir suspendre ladite conduite tubulaire audit flotteur. Tandis que la conduite tubulaire est relâchée verticalement à travers l'évidement traversant, le renflement vient s'appuyer sur la poutre autour de l'évidement traversant. De la sorte, la conduite tubulaire est suspendue au flotteur par l'intermédiaire de la poutre.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique représentant de côté des premiers éléments permettant de mettre en oeuvre la méthode d'installation d'une tour autoportée conformément à l'invention selon une première phase d'approche;
- la Figure 2 est une vue schématique représentant une deuxième phase d'immersion de l'un des éléments représenté sur la Figure 1;
- la Figure 3 est une vue schématique illustrant de face l'élément représenté sur la Figure 2 dans la deuxième phase d'immersion;
- la Figure 4 est une vue schématique en perspective d'un détail du premier élément représenté sur les Figures 1 à 3 ;
- la Figure 5 est une vue schématique représentant la mise en oeuvre d'un autre élément dans une troisième phase d'immersion;
- la Figure 6 est une vue schématique de détail de l'élément représenté sur la Figure 3 et de l'autre élément illustré sur la Figure 5 dans la troisième phase d'immersion ;
- la Figure 7 est une vue schématique de côté des éléments représentés sur la Figure 6 dans une quatrième phase d'immersion ;
- la Figure 8 est une vue schématique de face des éléments représentés sur la Figure 7 dans une cinquième phase d'immersion ; et,
- la Figure 9 est une vue schématique d'une tour autoportée conforme à l'invention selon une dernière phase de raccordement.

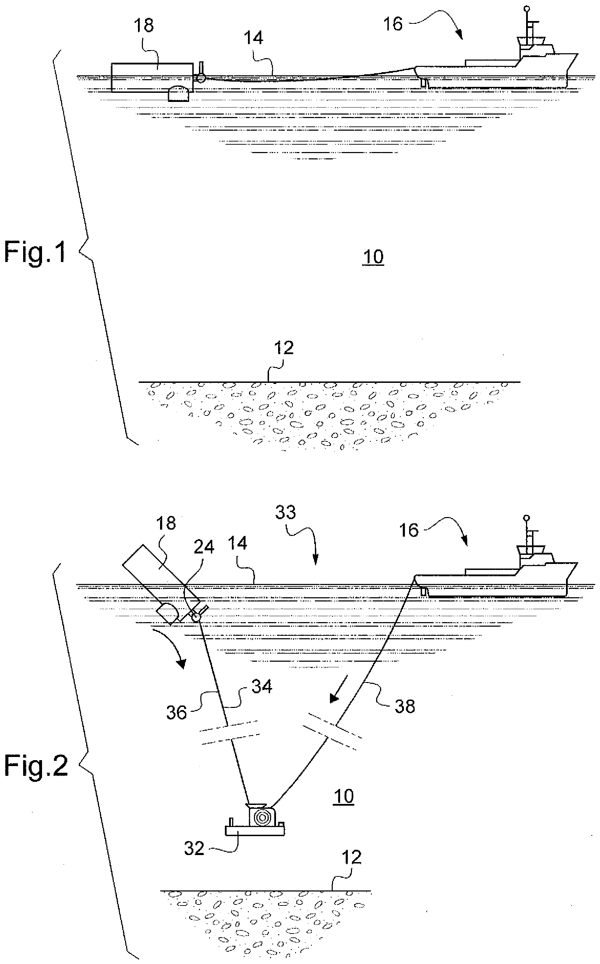

La Figure 1 illustre un milieu marin 10 qui s'étend entre un fond marin 12 et une surface 14. Sur cette surface 14 navigue un navire 16 remorquant un flotteur 18, lui-même flottant à la surface 14. Ainsi, le navire 16 entraîne le flotteur 18 vers une zone d'installation au droit d'un fond marin 12 d'où on souhaite extraire un hydrocarbure.

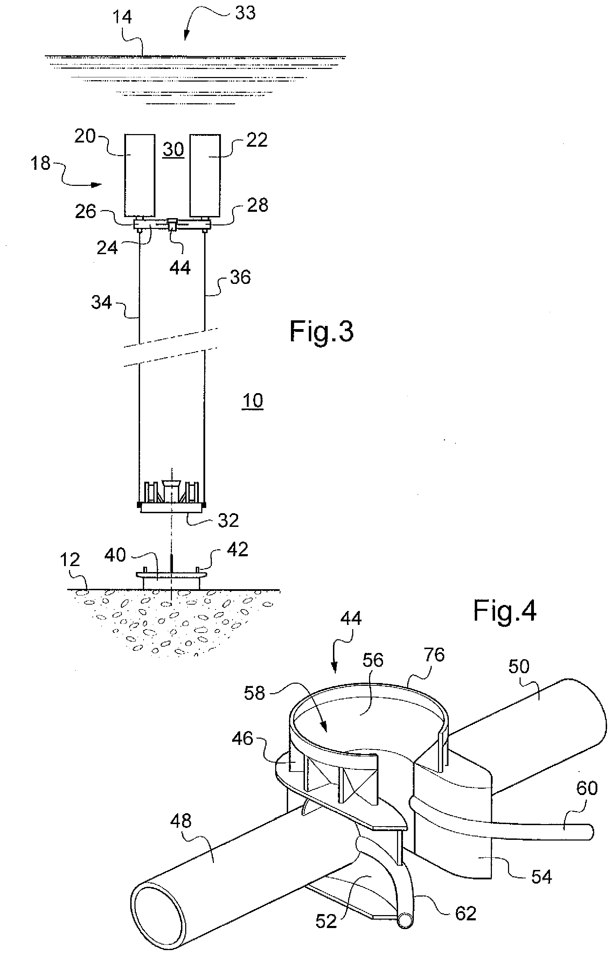

On se reportera sur la Figure 3 pour détailler le flotteur 18. Il présente deux parties cylindriques longitudinale 20, 22 reliées ensemble par une poutre transversale 24. Cette dernière présente deux extrémité opposées 26, 28 solidaires respectivement de l'extrémité des parties cylindriques longitudinales 20, 22 du flotteur 18. De la sorte, la poutre 24 maintient les deux parties 20, 22 sensiblement parallèles et à distance l'une de l'autre en ménageant un espace libre 30 entre les deux. Ainsi, la poutre 24 et les deux parties cylindriques longitudinales 20, 22 forment ensemble un flotteur 18 en U.

On observera que la poutre 24 est reliée par deux câbles parallèles 34, 36, respectivement installés à chacune de ses extrémités 26, 28, à une plateforme 32 que l'on retrouve vue de côté sur la Figure 2. Avant de compléter la description de cette Figure 3, on décrira plus précisément la Figure 2 montrant une première étape de l'immersion du flotteur 18, dans une zone d'installation 33.

La plateforme 32 est globalement plus dense que le milieu marin et elle est tout d'abord reliée d'une part au flotteur 18 par les deux câbles parallèles 34, 36, et d'autre part au navire 16 par l'intermédiaire d'un câble de largage 38, avant d'être immergée. Elle constitue un lest pour le flotteur 18 et à mesure que le câble de largage 38 est dévidé elle s'enfonce dans le milieu marin 10 vers le fond 12 et entraîne le flotteur 18 qui en surface, bascule vers une position verticale. Bien évidemment, la plate-forme 32 exerce une tension sur les câbles parallèles 34, 36, supérieure au poids du volume d'eau correspondant au volume du flotteur 18. Le câble de largage 38 permet de guider la descente de la plate-forme 32 vers le fond 12 et partant, l'immersion du flotteur 18.

On se reportera de nouveau sur la Figure 3 sur laquelle la plate-forme 32 est descendue et où les parties cylindriques longitudinales 20, 22 sont immergées verticalement.

Par ailleurs, sur le fond marin 12 est installée une embase 40 formant une installation d'ancrage et apte à recevoir la plate-forme 32. Cette embase 40 présente des plots de guidage 42 apte à venir s'engager dans des orifices ménagés à travers la plateforme 32 et permettant son parfait ajustement. Après que la plate-forme 32 a été appuyée sur l'embase 40, elle y est verrouillée pour en être solidaire. Aussi, le câble largage 38 est décroché et le flotteur 18 est maintenu immergé à distance de l'installation d'ancrage, en dessous de la surface 14 et plus particulièrement en dessous de la zone de turbulences.

On observera que la poutre 24 présente entre ces deux extrémités opposées 26, 28, un organe d'accrochage 44 que l'on retrouve plus en détail sur la Figure 4. Cet organe accrochage 44 comprend un étrier 46 et deux manchons coaxiaux 48, 50. L'étrier 46 présente deux ailes opposées 52, 54 et un fond 56. Ce dernier défini une zone cylindrique à base circulaire 58, et les deux manchons 48, 50 sont montés coaxialement de chaque côté respectivement sur les deux ailes opposées 52, 54. En outre, les deux ailes opposées 52, 54 sont respectivement prolongées par des aiguilles de guidage 60, 62 qui s'écartent l'une de l'autre.

Ainsi, l'organe d'accrochage 24 est installé à travers la poutre 24 sensiblement à équidistance des deux extrémités opposées 26, 28 de façon à ce que les deux manchons coaxiaux 48, 50 s'étendent longitudinalement à l'intérieur de la poutre 24, et que la zone cylindrique à base circulaire 58 de l'étrier 46 traverse la poutre 24 et débouche, d'une part selon une direction verticale dans l'espace libre 30 entre les deux parties 20, 22 du flotteur 18 et à l'opposé dans l'espace situé sous la poutre 24, et d'autre part selon une direction horizontale dans un espace libre d'approche qui s'étend entre les deux ailes opposées 52, 54 puis entre les aiguilles de guidage 60, 62. Cet espace libre d'approche, s'étend bien évidemment sensiblement perpendiculairement à la poutre 24 et en dehors d'elle.

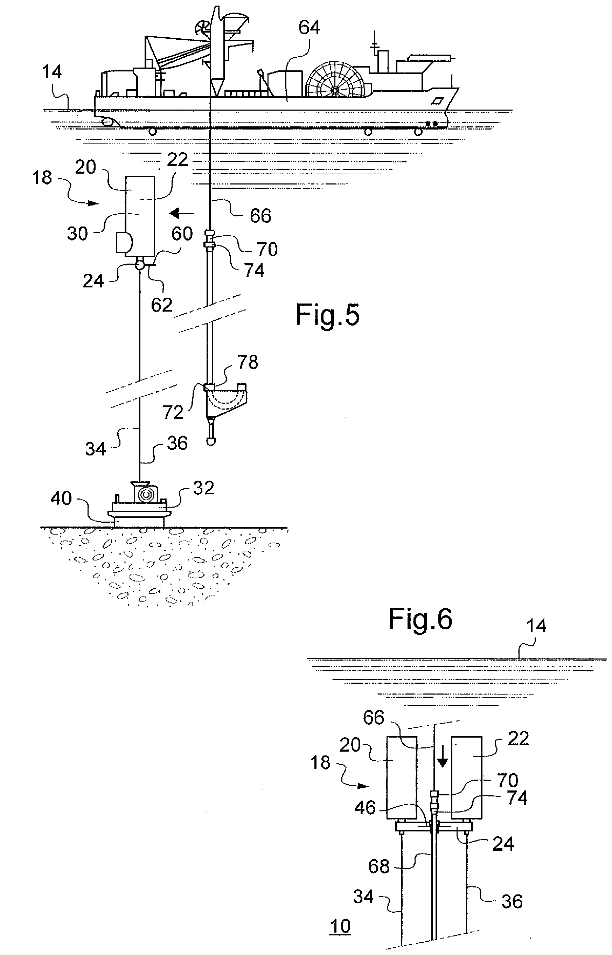

On se reportera à présent sur la Figure 5 où l'on retrouve le flotteur 18 maintenu à distance de l'installation d'ancrage formée par l'embase 40 associée à la plate-forme 32. On retrouve également vu selon son axe la poutre 24, solidaire de l'extrémité des parties 20, 22 du flotteur 18. Seules les aiguilles de guidage 60, 62 de l'organe d'accrochage 44 apparaissent sur cette Figure en saillie de la poutre 24.

En outre, cette Figure illustre un navire de pose 64 maintenant suspendue à une élingue 66, une conduite tubulaire rigide 68. Cette dernière a pu être réalisée directement sur le bateau de pose par assemblage de tronçons, ou bien être réalisée à terre puis enroulée selon des techniques d'enroulement des conduites rigides pour ensuite être déroulée in situ.

La conduite tubulaire rigide 68 présente une extrémité supérieure 70 à laquelle l'élingue 66 est reliée, et une extrémité inférieure 72. L'extrémité supérieure 70 présente en outre un renflement 74 constitué d'un manchon tronconique. Ainsi, le navire de pose 64 va entraîner la conduite tubulaire rigide 68 vers le flotteur 18 en portant la conduite tubulaire 68 tout d'abord entre les aiguilles de guidage 62, 60 tandis que l'extrémité supérieure 70 et le renflement 74 viennent s'engager au-dessus de la poutre 24 à l'intérieur de l'espace libre 30 situé entre les deux parties 20, 22 du flotteur 18. La conduite tubulaire 68 s'engage ensuite entre les deux ailes 52, 54 de l'étrier 46 puis à l'intérieur de la zone cylindrique à base circulaire 58 comme illustré de face sur la Figure 6.

Ensuite, l'élingue 66 est relâchée de manière à venir appuyer le manchon tronconique du renflement 74 à l'intérieur du fond 56 de l'étrier 46. Bien évidemment, le manchon présente une bordure dont le diamètre est supérieur à celui de la zone cylindrique circulaire 58 de manière à venir en appui sur un bord 76 du fond 56 de l'étrier 46. Ce bord 76 est représenté sur la Figure 4. Grâce au poids de la conduite tubulaire 68, le renflement 74 est prisonnier de l'étrier 46. Ainsi, l'extrémité supérieure 70 de la conduite tubulaire 68 est solidaire du flotteur 18 par l'intermédiaire de la poutre 24.

L'ensemble constitué par le flotteur 18 et la conduite 68 est alors à l'équilibre car le poids de la conduite tubulaire 68 n'est pas suffisant pour entraîner le flotteur 18 vers le fond 12. En outre, le flotteur 18 est toujours retenu par l'intermédiaire des deux câbles parallèles 34, 36.

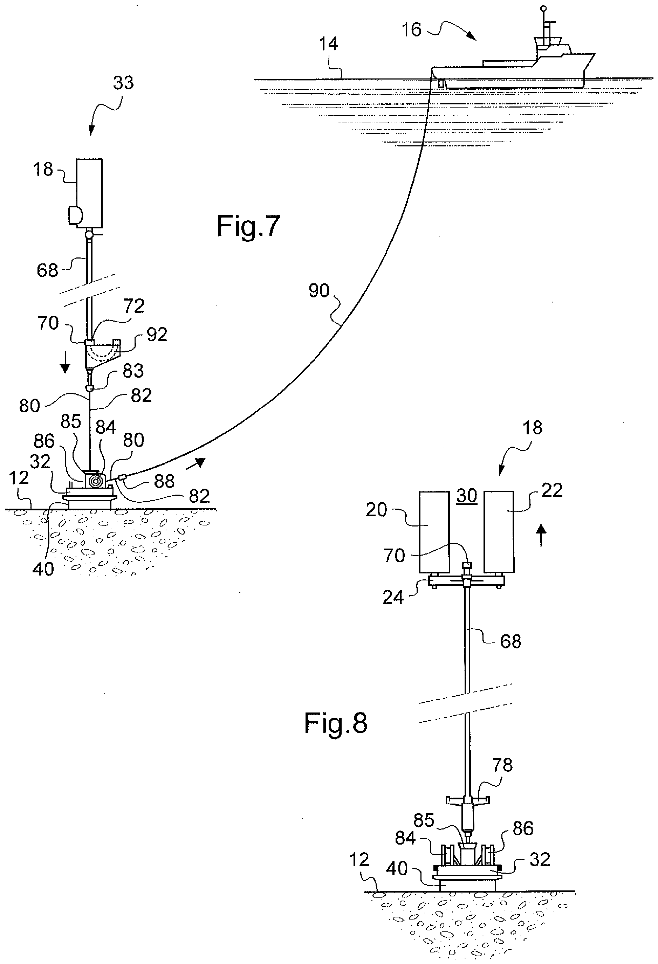

Aussi, le flotteur 18 et la conduite tubulaire 68 vont être entraînés vers l'installation d'ancrage 32, 40, en entraînant l'extrémité inférieure 72 de la conduite rigide 68. L'extrémité inférieure 72, que l'on retrouve sur la Figure 7 est alors équipée d'un premier palonnier 78 présentant deux bras opposés respectivement solidaires de deux câbles de tirage 80, 82 et d'une tête d'accrochage automatique 83. Les câbles de tirage 80, 82 sont respectivement engagés à travers deux roues à gorge 84, 86 formant organes de renvoi, et installées sur la plate-forme 32 écartées l'un de l'autre. Entre les deux roues à gorge 84, 86, est installé un boîtier de verrouillage 85, destiné à venir emprisonner automatiquement la tête de verrouillage 83 de l'extrémité inférieure 72 de la conduite tubulaire 68.

Aussi, les deux câbles le tirage 80, 82 sont reliés à la sortie des roues à gorge 84, 86 à un second palonnier 88 lui-même relié au navire 16 par l'intermédiaire d'une ligne de tirage 90.

Ainsi, en s'écartant de la zone d'installation 33, le navire 16 entraîne en translation la ligne de tirage 90, et partant, le second palonnier dans un sens opposé à la plate-forme 30. En conséquence, les câbles de tirage 80, 82 sont respectivement entraînés dans les roues à gorge 84, 86 et le premier palonnier 78 est entraîné vers la plate-forme 32 tout comme extrémité inférieure 72 de la conduite tubulaire 68. La tête de verrouillage 83 s'engage alors à l'intérieur du boîtier de verrouillage 85 et s'y emprisonne automatiquement. De la sorte, l'extrémité inférieure 72 de la conduite tubulaire 68 est maintenue accrochée à la plate-forme 32, elle-même prisonnière de l'embase 40. Elle est alors équipée d'un raccord en U 92 pour pouvoir raccorder la conduite tubulaire 68 à une tête de puits ou à un réservoir tampon sous-marin.

La Figure 8 illustre ainsi la conduite tubulaire 68 maintenue verticalement à l'équilibre par l'intermédiaire du flotteur 18 qui exerce un effort ascensionnel sur son extrémité supérieure 70 au niveau du renflement 74. La conduite tubulaire 68 est dite, conduite montante, et elle forme avec le flotteur 78 une tour autoportée. Les câbles parallèles 34, 36 reliant la poutre 24 et la plate-forme 32 ont été retirés tout comme les câbles de tirage 80, 82 du palonnier 78.

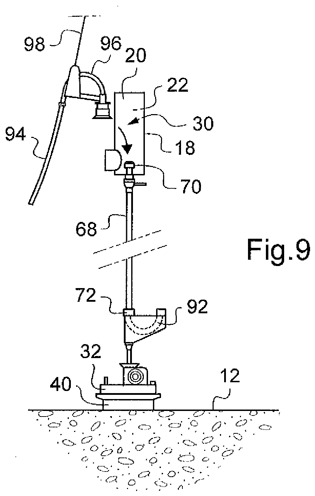

Dans une ultime étape, illustrée sur la Figure 9, un conduit flexible 94 terminé par un raccord en col de cygne 96 est engagé à travers l'espace libre 30 situé entre les deux parties 20, 22 du flotteur 18, depuis le navire 16 au moyen d'un câble de positionnement 98 de manière à venir coiffer l'extrémité supérieure 70 de la conduite tubulaire 68. Ce conduit flexible 94 s'étend alors en caténaire entre le flotteur 18 et une installation de surface incluant des réservoirs de stockage.

## Revendications

1. Méthode d'installation d'une tour autoportée d'extraction des hydrocarbures en milieu marin, ledit milieu marin (10) présentant une surface (14) opposée à un fond (12), ladite méthode étant du type selon laquelle :
- on fournit une installation d'ancrage (32) et on installe ladite installation d'ancrage sur ledit fond,
- on fournit un flotteur (18) et séparément une conduite tubulaire (68) présentant deux extrémités opposées (70, 72),
- on immerge, selon une étape d'immersion, ledit flotteur (18) et ladite conduite tubulaire (68) au droit de ladite installation d'ancrage (40) ;
- on entraîne en mouvement ledit flotteur (18) et la conduite tubulaire (68) vers ledit fond (12) pour accrocher l'une desdites extrémités de ladite conduite tubulaire (72) à ladite installation d'ancrage (40), tandis que ledit flotteur (18) est solidaire de l'autre desdites extrémités (70) pour maintenir verticalement ladite conduite (68) dans ledit milieu marin (10) à partir de ladite installation d'ancrage (40) ;
**caractérisée en ce que** ladite étape d'immersion comprend dans l'ordre les sous-étapes suivantes :
- on fournit au moins une ligne d'ancrage (34, 36) pour ancrer ledit flotteur (18) dans ledit fond marin (12), de manière à pouvoir maintenir ledit flotteur immergé à distance de ladite installation d'ancrage (40) ; et,
- on suspend ladite conduite tubulaire (68) audit flotteur (18) par ladite autre desdites extrémités (70) avant d'entraîner en mouvement ledit flotteur (18) et la conduite tubulaire (68) vers ledit fond.

2. Méthode d'installation selon la revendication 1, **caractérisée en ce qu'**on fournit en outre un conduit flexible (94), et **en ce qu'**on étend ledit conduit flexible entre ledit flotteur (18) et ladite surface (14) pour raccorder ledit conduit flexible (94) à ladite autre desdites extrémités (70) de ladite conduite tubulaire (68).

3. Méthode d'installation selon la revendication 1 ou 2, **caractérisée en ce qu'**on fournit une conduite tubulaire (68) rigide.

4. Méthode d'installation selon l'une quelconque des revendications 1 à 3, **caractérisée en ce que** ladite autre desdites extrémités (70) présente un renflement (74), tandis que ledit flotteur (18) comporte un étrier d'accrochage (46), et **en ce qu'**on engage latéralement ladite conduite tubulaire (68) à travers ledit étrier d'accrochage (46) de manière à pouvoir appuyer ledit renflement (74) sur ledit étrier d'accrochage (46).

5. Méthode d'installation selon la revendication 4, **caractérisée en ce qu'**on retient ladite conduite tubulaire (68) depuis ladite surface (14) par ladite autre desdites extrémités (70) pour pouvoir engager ladite autre desdites extrémités à travers ledit étrier d'accrochage (46).

6. Méthode d'installation selon l'une quelconque des revendications 1 à 5, **caractérisée en ce qu'**on libère ledit flotteur (18) de ladite au moins une ligne d'ancrage (34, 36) lorsque ladite une desdites extrémités (72) de ladite conduite tubulaire (68) est accrochée à ladite installation d'ancrage (40).

7. Méthode d'installation selon l'une quelconque des revendications 1 à 6, **caractérisée en ce qu'**on entraîne ladite une desdites extrémités (72) de ladite conduite tubulaire (68) vers ladite installation d'ancrage (40) pour entraîner en mouvement ledit flotteur (18) et ladite conduite tubulaire (68) vers ledit fond (12).

8. Méthode d'installation selon la revendication 7, **caractérisée en ce qu'**on fournit en outre un câble de tirage (90), et **en ce qu'**on relie ledit câble de tirage à ladite une desdites extrémités (72) de ladite conduite tubulaire (68) pour l'étendre d'une part dans des organes de renvoi (84, 86) montés sur ladite installation d'ancrage (40) et d'autre part vers ladite surface (14) de manière à pouvoir tirer ledit câble de tirage (90) depuis ladite surface.

9. Méthode d'installation selon l'une quelconque des revendications 1 à 8, **caractérisée en ce qu'**on fournit un flotteur (18) présentant deux parties (20, 22) espacées l'une de l'autre et reliées ensemble par une poutre de liaison (24), et **en ce que** lesdites deux parties (20, 22) espacées l'une de l'autre et ladite poutre de liaison (24) forment un flotteur (18) en U présentant un espace libre (30) entre lesdites parties.

10. Méthode d'installation selon la revendication 4 et 9, **caractérisée en ce que** ladite poutre de liaison (24) présente un évidement traversant (58), débouchant d'une part selon une première direction dans ledit espace libre (30) et à l'opposé dudit espace libre par rapport à ladite poutre (24), et débouchant d'autre part selon une seconde direction perpendiculaire à ladite première direction, dans un espace libre d'approche de manière à former ledit étrier d'accrochage (46).

11. Méthode d'installation selon la revendication 10, **caractérisée en ce que** ledit renflement (74) est apte à être porté à l'intérieur dudit espace libre (30) pour venir en prise dans ledit étrier d'accrochage (46) et de manière à pouvoir suspendre ladite conduite tubulaire (68) audit flotteur (18).

## Patentansprüche

1. Verfahren zum Installieren eines selbsttragenden Turms zur Förderung von Kohlenwasserstoffen in Meeresumgebung, wobei die Meeresumgebung(10) eine Oberfläche (14) aufweist, die einem Boden (12) gegenüberliegt, wobei das Verfahren von dem Typ ist, wonach:
- eine Verankerungsanlage (32) bereitgestellt wird und die Verankerungsanlage auf dem Boden installiert wird,
- ein Schwimmer (18) und getrennt eine Rohrleitung (68) bereitgestellt werden, die zwei entgegengesetzte Enden (70, 72) aufweist,
- in einem Schritt des Tauchens der Schwimmer (18) und die Rohrleitung (68) rechtwinklig zu der Verankerungsanlage (40) getaucht werden;
- der Schwimmer (18) und die Rohrleitung (68) zu dem Boden (12) hin in Bewegung versetzt werden, um eines der Enden (72) der Rohrleitung an der Verankerungsanlage (40) einzuhängen, während der Schwimmer (18) mit dem anderen der Enden (70) fest verbunden ist, um die Rohrleitung (68) in der Meeresumgebung (10) von der Verankerungsanlage (40) aus senkrecht zu halten;
**dadurch gekennzeichnet, dass** der Schritt des Tauchens in der Reihenfolge die folgenden Teilschritte umfasst:
- Bereitstellen mindestens einer Verankerungsleitung (34, 36), um den Schwimmer (18) in dem Meeresboden (12) zu verankern, so dass der Schwimmer von der Verankerungsanlage (40) beabstandet getaucht gehalten werden kann; und
- Aufhängen der Rohrleitung (68) an dem Schwimmer (18) durch das andere der Enden (70), bevor der Schwimmer (18) und die Rohrleitung (68) zu dem Boden hin in Bewegung versetzt werden.

2. Installationsverfahren nach Anspruch 1, **dadurch gekennzeichnet, dass** ferner eine flexible Rohrleitung (94) bereitgestellt wird und dass die flexible Rohrleitung zwischen dem Schwimmer (18) und der Oberfläche (14) gespannt wird, um die flexible Rohrleitung (94) mit dem anderen der Enden (70) der Rohrleitung (68) zu verbinden.

3. Installationsverfahren nach Anspruch 1 oder 2, **dadurch gekennzeichnet, dass** eine starre Rohrleitung (68) bereitgestellt wird.

4. Installationsverfahren nach einem der Ansprüche 1 bis 3, **dadurch gekennzeichnet, dass** das andere der Enden (70) einen Wulst (74) aufweist, während der Schwimmer (18) einen Einhängbügel (46) aufweist, und dass die Rohrleitung (68) seitlich durch den Einhängbügel (46) hindurch geführt wird, so dass der Wulst (74) sich auf dem Einhängbügel (46) abstützen kann.

5. Installationsverfahren nach Anspruch 4, **dadurch gekennzeichnet, dass** die Rohrleitung (68) von der Oberfläche (14) aus durch das andere der Enden (70) zurückgehalten wird, um das andere der Enden durch den Einhängbügel (46) hindurch führen zu können.

6. Installationsverfahren nach einem der Ansprüche 1 bis 5, **dadurch gekennzeichnet, dass** der Schwimmer (18) von der mindestens einen Verankerungsleitung (34, 36) gelöst wird, wenn das eine der Enden (72) der Rohrleitung (68) an der Verankerungsanlage (40) eingehängt ist.

7. Installationsverfahren nach einem der Ansprüche 1 bis 6, **dadurch gekennzeichnet, dass** das eine der Enden (72) der Rohrleitung (68) zu der Verankerungsanlage (40) hin mitgenommen wird, um den Schwimmer (18) und die Rohrleitung (68) zu dem Boden (12) hin in Bewegung zu versetzen.

8. Installationsverfahren nach Anspruch 7, **dadurch gekennzeichnet, dass** ferner ein Zugseil (90) bereitgestellt wird und dass das Zugseil mit dem einen der Enden (72) der Rohrleitung (68) verbunden wird, um es einerseits in Umlenkorganen (84, 86), die an der Verankerungsanlage (40) montiert sind, und andererseits zu der Oberfläche (14) hin zu spannen, so dass das Zugseil (90) von der Oberfläche aus gezogen werden kann.

9. Installationsverfahren nach einem der Ansprüche 1 bis 8, **dadurch gekennzeichnet, dass** ein Schwimmer (18) bereitgestellt wird, der zwei Teile (20, 22) aufweist, die voneinander beabstandet sind und durch einen Verbindungsträger (24) miteinander verbunden sind, und dass die zwei voneinander beabstandeten Teile (20, 22) und der Verbindungsträger (24) einen U-förmigen Schwimmer (18) bilden, der zwischen den Teilen einen freien Raum (30) aufweist.

10. Installationsverfahren nach Anspruch 4 und 9, **dadurch gekennzeichnet, dass** der Verbindungsträger (24) eine durchgehende Ausnehmung (58) aufweist, die einerseits in einer ersten Richtung in dem freien Raum (30) und relativ zu dem Träger (24) dem freien Raum gegenüber mündet und andererseits in einer zweiten, zu der ersten Richtung senkrechten Richtung in einem freien Annäherungsraum mündet, so dass der Einhängbügel (46) gebildet wird.

11. Installationsverfahren nach Anspruch 10, **dadurch gekennzeichnet, dass** der Wulst (74) dazu eingerichtet ist, in das Innere des freien Raums (30) gebracht zu werden, um in dem Einhängbügel (46) in Eingriff zu kommen und um die Rohrleitung (68) an dem Schwimmer (18) aufhängen zu können.

## Claims

1. A method of installing a self-supporting tower for the extraction of hydrocarbons in a marine environment, said marine environment (10) having a surface (14) opposite to a bed (12), said method being of the type whereby:
- an anchorage installation (32) is provided and said anchorage installation is installed on said bed,
- a float (18) and separately a tubular pipe (68) having two opposite ends (70, 72) are provided,
- in an immersion step, said float (18) and said tubular pipe (68) are immersed in line with said anchorage installation (40);
- said float (18) and the tubular pipe (68) are made to move toward said bed (12) so that one of said ends of said tubular pipe (72) can be attached to said anchorage installation (40) while said float (18) is secured to the other of said ends (70) in order to keep said pipe (68) vertical in said marine environment (10) starting from said anchorage installation (40);
**characterized in that** said immersion step comprises, in order, the following substeps :
- one anchorage line is provided (34-36) for anchoring said float (18) into sea bed (12) so as to be able to keep said float immersed some distance away from said anchorage installation (40); and
- said tubular pipe (68) is suspended from said float (18) via said other of said ends (70) before said float (18) and said tubular pipe (68) are made to move toward said bed.

2. The method of installing as claimed in claim 1, **characterized in that** a flexible pipe (94) is further provided and **in that** said flexible pipe is extended between said float (18) and said surface (14) for coupling said flexible pipe (94) to said other of said ends (70) of said tubular pipe (68).

3. The method of installing as claimed in claim 1 or 2, **characterized in that** a rigid tubular pipe (68) is provided.

4. The method of installing as claimed in any one of claims 1 to 3, **characterized in that** said other of said ends (70) has a bulge (74), whereas said float (18) comprises an attachment yoke (46), and **in that** said tubular pipe (68) is engaged laterally through said attachment yoke (46) so that said bulge (74) can be made to press against said attachment yoke (46).

5. The method of installing as claimed in claim 4, **characterized in that** said tubular pipe (68) is held from said surface (14) by said other of said ends (70) so that said other of said ends can be engaged through said attachment yoke (46).

6. The method of installing as claimed in any one of claims 1 to 5, **characterized in that** said float (18) is released from said at least one anchorage line (34, 36) when said one of said ends (72) of said tubular pipe (68) is attached to said anchorage installation (40).

7. The method of installing as claimed in any one of claims 1 to 6, **characterized in that** said one of said ends (72) of said tubular pipe (68) is driven toward said anchorage installation (40) to cause said float (18) and said tubular pipe (68) to move toward said bed (12).

8. The method of installing as claimed in claim 7, **characterized in that** a hauling cable (90) is also provided and **in that** said hauling cable is connected to said one of said ends (72) of said tubular pipe (68) so that it is extended firstly through return members (84, 86) mounted on said anchorage installation (40) and secondly toward said surface (14) so that said hauling cable (90) can be hauled from said surface.

9. The method of installing as claimed in any one of claims 1 to 8, **characterized in that** a float (18) is provided having two parts (20, 22) spaced apart and joined together by a connecting beam (24) and **in that** the two parts (20, 22) spaced apart and said connecting beam (24) form a U-shaped float (18) having an empty space (30) between said parts.

10. The method of installing as claimed in claim 4 and 9, **characterized in that** connecting beam (24) has a through-recess (58) opening on one hand in a first direction into said empty space (30) and on the opposite side of said empty space from said beam (24) and one the other hand opening in a second direction perpendicular to said first direction, into a free approach space so as to form an attachment yoke (46).

11. The method of installing as claimed in claim 10, **characterized in that** said bulge (74) is able to be held inside said empty space (30) to engage it with said attachment yoke (46) and in such a way that said tubular pipe (68) can be suspended from said float (18).
